Europäisches Patentamt

European Patent Office

Office européen des brevets

(11) Numéro de publication: **0 275 784**
A1

## DEMANDE DE BREVET EUROPEEN

(21) Numéro de dépôt: 87402970.5

(22) Date de dépôt: 23.12.87

(51) Int. Cl.4: **B60G 7/02** , B60G 11/18

(30) Priorité: 23.12.86 FR 8618061

(43) Date de publication de la demande:
27.07.88 Bulletin 88/30

(84) Etats contractants désignés:
DE ES GB IT SE

(71) Demandeur: **REGIE NATIONALE DES USINES RENAULT**
Boîte postale 103 8-10 avenue Emile Zola
F-92109 Boulogne-Billancourt(FR)

(72) Inventeur: **Krin, René**
73, rue Béranger
F-92700 Colombes(FR)

(74) Mandataire: **Réal, Jacques et al**
8 & 10, avenue Emile Zola
F-92109 Boulogne-Billancourt(FR)

(54) **Structure modulaire pour suspension arrière à roues indépendantes de véhicule automobile.**

(57) Structure modulaire pour une suspension arrière à roues indépendantes d'un véhicule automobile, du type à deux bras tiré. On constitue un sous-ensemble comportant un palier (31), fixé par son extrémité supérieure en (32) au longeron (33), dont l'extrémité inférieure est solidarisée en (34) à une traverse (35) accrochée audit longeron (33), ladite extrémité inférieure du palier (31) permettant en outre la fixation d'une extrémité de la barre de torsion (9) et du bras de roue (1), ce dernier supportant à son extrémité supérieure prend appui sur un bec (30) disposé à la partie haute du palier (31).

FIG.4

EP 0 275 784 A1

## STRUCTURE MODULAIRE POUR SUSPENSION ARRIERE A ROUES INDEPENDANTES DE VEHICULE AUTOMOBILE

La présente invention se rapporte à une suspension arrière à roues indépendantes, notamment du type à bras tirés et à barres de torsion, telle que décrite dans les brevets français 80/15444 et 83/13149 de la demanderesse, et plus particulièrement à sa fixation à la structure arrière du véhicule.

Une telle suspension est constituée par un profil en V réunissant les bras de roue par leurs extrémités opposées aux fusées, deux barres de torsion logées dans le profil précédent étant réunies en leur milieu par une jumelle, et par leurs extrémités libres respectivement à la caisses du véhicule pour l'une et aux bras de suspension pour l'autre.

L'automatisation de l'assemblage économique d'un véhicule rend souhaitable la constitution d'éléments modulaires indépendants et la standardisation maximale des éléments de structure communs à plusieurs modèles ; en ce qui concerne une suspension de véhicule automobile selon les brevets ci-dessus, un élément modulaire préassemblé à un autre poste de travail comporterait avantageusement les deux bras de suspension réunis par le profil transversal en V incluant les deux barres de torsion convenablement comprimées, les deux amortisseurs totalement fixés au module par leurs parties haute et basse et, le cas échéant, certains organes annexes tels que le compensateur de freinage définitivement réglé, les flexibles de frein, etc...

De la même façon, la standardisation recherchée du maximum d'éléments de la structure peut être illustrée par l'utilisation d'un même type de longerons pour différents véhicules possédant des hauteurs différentes de l'assise de sa partie arrière ; cette faculté est facilitée par la constitution d'un élément modulaire approprié de suspension selon l'invention.

Un mode de fixation modulaire de suspension selon l'invention, présentant les avantages précédents, sera maintenant décrit à titre d'exemple non limitatif au regard des figures ci-dessous.

- Les figures 1 et 2 se rapportent à des vues respectivement en plan et en élévation de l'état antérieur de la technique en la matière.

- Les figures 3 et 4 illustrent, par des vues analogues aux précédentes, une structure modulaire selon l'invention.

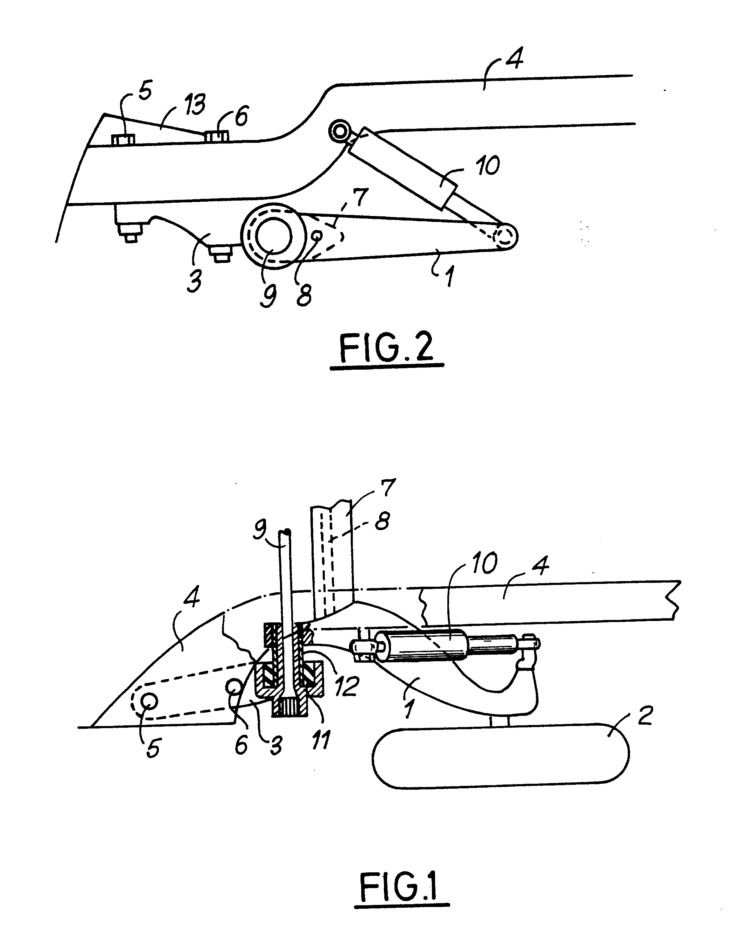

La structure antérieure représentée aux figures 1 et 2 comporte un bras tiré 1 dont une extrémité supporte la roue 2 et dont l'autre est solidarisée par l'intermédiaire d'une pièce 3 au longeron 4 au moyen de deux boulons 5 et 6.

Les deux bras 1 sont réunis transversalement par un profil 7 en V présentant une grande inertie en flexion et une faible inertie en torsion et par une barre antidévers 8. Une seconde barre de torsion 9 présente des extrémités ancrées dans les pièces de liaison 3. Un amortisseur 10 prend appui par son extrémité basse sur le bras 1 et par son extrémité supérieure sur le longeron 4.

Plusieurs inconvénients résultent de la disposition précédente :

- La suspension ne constitue pas un module complet et son montage ultérieur n'est pas optimisé, car l'extrémité supérieure de l'amortisseur doit être fixée sur le longeron 4 et la compression des barres 8 - 9 doit intervenir sur la chaîne principale.

- Les points d'ancrage du train se font essentiellement par les boulons 5 et 6 qui, du fait de la géométrie de la suspension, sont le siège de très fortes contraintes. De ces dernières découlent un surdimensionnement nécessaire des boulons et une grande résistance de la zone du longeron sur laquelle lesdits boulons 5 - 6 prennent appui.

- De ce qui précède résulte l'obligation de disposer d'un longeron spécifique à chaque type de véhicule ; si l'on souhaite modifier la hauteur d'assise de ce dernier, il faudra donc utiliser le longeron correspondant.

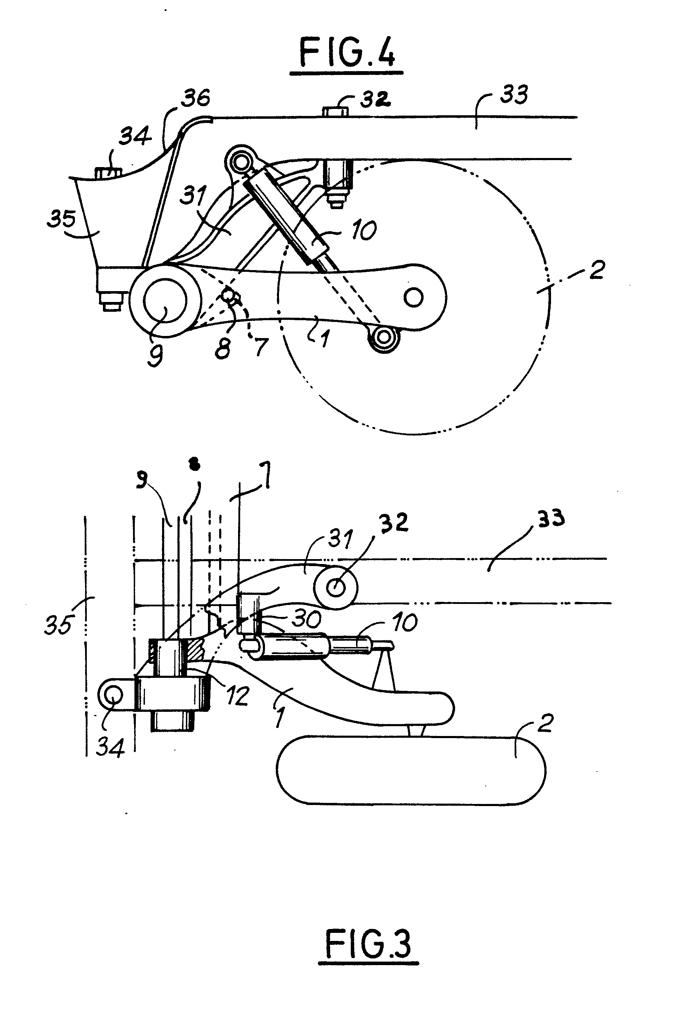

L'objet de l'invention pallie les difficultés ci-dessus. Comme on le voit sur la figure 3, de nombreux organes sont communs à ceux représentés à la réalisation précédente. On retrouve les bras tirés 1 supportant la roue 2, reliés entre eux par le profil 7 en V présentant des caractéristiques mécaniques analogues, les barres antidévers 8 et de torsion 9.

Cependant, on remarquera que la partie supérieure de l'amortisseur 10 est fixée à un bec 30 supporté par un palier 31 solidarisé à son extrémité haute par un boulon 32 sur le longeron 33 et par un boulon 34 à une traverse 35 fixée au même longeron 33.

On notera que la partie basse dudit palier 31 constitue l'équivalent de la pièce de liaison 3 des figures 1 et 2, à l'intérieure de laquelle tourillonne par l'intermédiaire d'un palier élastique 11 le prolongement 12 du bras de roue 1.

On constate que, compte tenu de la géométrie du train selon l'invention, les efforts subis dans les fixations 32 - 34 du train à la caisse sont de l'ordre de 2 à 3 fois moins importants que ceux qui règnent dans leurs homologues 5 - 6 de la géométrie selon les figures 1 et 2.

De ce qui précède, il résulte que ces attaches peuvent être moins résistantes, donc plus légères et moins coûteuses. Du fait de l'amoindrissement des efforts au niveau de l'attache 34, consécutif au déplacement en 32 de la fixation 6 de la figure 2, son support n'est plus nécessairement le longeron 33 lui-même, mais peut être constitué par une pièce rapportée, de moindre résistance, en l'occurence la traverse 35.

Ceci a pour conséquence que, selon les besoins, on peut avec un même longeron 33 concevoir toute une gamme de véhicules de hauteur d'assise 36 différente, en le combinant avec une série de traverses 35 dont la hauteur sera spécifique ; ceci est beaucoup moins coûteux que de prévoir l'équivalent d'un longeron 4 entier pour chacun des types de véhicules composant ladite gamme. On notera que, selon l'invention, on réalise bien un module de train arrière complètement terminé et indépendant, assemblé sur chaîne par seulement deux points 32 - 34 situés de chaque côté de la caisse du véhicule.

En variante de la réalisation ci-dessus, on réunit les deux paliers 31 par une traverse rigide transversale encastrée ; ceci permet, compte tenu de la raideur complémentaire ainsi créée, de disposer des plots de caoutchouc au niveau des fixations 32 - 34, entre les longerons 33 et la traverse 35 d'une part, et les paliers 31 d'autre part, créant de ce fait une filtration pour la caisse des buits de roulements en provenance des roues.

Naturellement, on ne sortirait pas de la présente invention en appliquant les dispositions modulaires ci-dessus à des réalisations partiellement modifiées, par exemple au niveau de la forme du profil 7 ou de la disposition des barres de torsion.

## Revendications

1/ Structure modulaire pour une suspension arrière à roues indépendantes d'un véhicule automobile, du type constituant un sous-ensemble indépendant comportant notamment les bras de roue réunis par un profil flexible en torsion mais rigide en flexion, des barres de torsion et des amortisseurs, caractérisée par le fait que ce sous-ensemble est solidarisé à une traverse (35) accrochée aux longerons (33).

2/ Structure modulaire selon la revendication 1, caractérisée en ce que l'on fait varier la hauteur de l'assise du véhicule en agissant sur la hauteur de la seule traverse (35), le longeron (33) étant alors conservé en l'état.

FIG.2

FIG.1

# FIG.4

# FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 061 944  (AUTOMOBILES PEUGEOT) * Revendications 1-5; figures 1-3 * | 1 | B 60 G   7/02 B 60 G  11/18 |
| Y | FR-A-1 158 530  (S.A. DES ANCIENS ETABLISSEMENTS PANHARD & LEVASSOR) * Résumé; figures 1,2,7 * | 1 | |
| A | * Figure 7 * | 2 | |
| A | FR-A-2 392 839  (REGIE NATIONALE DES USINES RENAULT) * Revendications 1,2; figures 1-7 * | 1 | |
| A | FR-A-2 395 162  (AUTOMOBILES PEUGEOT et al.) * Revendications 1-3; figures 1-3 * | 1 | |
| A | FR-A-2 393 690  (S.A. AUTOMOBILES CITROEN et al.) * Figures 1,2 * | 1 | |
| A | FR-A-2 400 441  (DR. ING. H.C.F. PORSCHE AG) * Figure 1 * | 1 | DOMAINES TECHNIQUES RECHERCHES (Int. Cl.4) B 60 G |

Le présent rapport a été établi pour toutes les revendications

| Lieu de la recherche | Date d'achèvement de la recherche | Examinateur |
|---|---|---|
| LA HAYE | 22-03-1988 | SINGER G.M. |